# EUROPEAN PATENT SPECIFICATION

(11) **EP 2 216 707 B1**
(45) Date of publication and mention of the grant of the patent: **08.08.2018**
(21) Application number: 09007548.2
(22) Date of filing: 08.06.2009
(51) Int. Cl.: G06F 3/041

(54) **Key-integrated LCD panel and method of integrating keys into LCD panel**
LCD-Tafel mit integrierten Tasten und Verfahren zum Integrieren von Tasten in einer LCD-Tafel
Panneau LCD avec des touches integrées et procédé pour integrer des touches dans un panneau LCD

(30) Priority: 06.02.2009 TW 98103860
(43) Date of publication of application: 11.08.2010
(73) Proprietor: Acer Incorporated, Taipei Hsien 221 (TW)
(72) Inventor: Chen, Chih-Chiang, Taipei Hsien 221 (TW)
(74) Representative: advotec.

(56) References cited:
- WO-A2-2005/114369
- DE-A1- 19 828 978
- US-A- 4 126 760
- US-A1- 2008 062 139
- US-A1- 2009 002 331

## Description

### FIELD OF THE INVENTION

The present invention relates to an LCD panel, and more particularly to a key-integrated LCD panel.

### BACKGROUND OF THE INVENTION

Most electronic products, such as liquid crystal displays (LCDs), notebook computers, personal digital assistants (PDAs), various information appliances, navigators for cars, etc., have an LCD panel as a display interface and a keyboard or a plurality of keys for use by a user to input data. The conventional physical keys can be generally divided into three types, namely, mechanical type, thin-film type, and capacitive-switch type. No matter what type of keys is adopted, at least one set of printed circuit board and flexible flat cable is needed to transmit the signal generated by a pushed key to the computer or the system of the electronic device via the printed circuit board and the flexible flat cable. The above conventional keys have the disadvantages of occupying the usable space of the electronic device and increasing the overall weight or cost of the electronic device, and therefore tend to form restriction in the degree of freedom in designing electronic products.

Moreover, due to the trends of miniaturization of electronic products, the space on an electronic product available for the input device, such as push buttons, input keys, etc., is largely reduced to adversely affect the user's comfort and convenience in manipulating the buttons or keys. Therefore, for those electronic products that use an LCD panel as their display interface, the degree of freedom in designing the electronic products can be largely increased if the original physical keys can be integrated into the LCD panel. Meanwhile, the thickness and area of non-display areas on the electronic products as well as the number of components for the electronic products, such as the mechanical switches, the printed circuit board, and the flexible flat cable for the physical keys, can also be largely reduced.

### CLOSEST PRIOR ART

US2008/062139 discloses a key-integrated LCD panel, comprising:a transistor substrate;a color filter substrate being laid on one face of the transistor substrate;a first conductor being arranged on one face of the transistor substrate facing toward the color filter substrate and carrying a first-level signal; and a second conductor.

### SUMMARY OF THE INVENTION

A primary object of the present invention is to provide a key-integrated LCD panel, which integrates simple key structures thereinto to enable not only reduced number of physical keys on an electronic product, but also reduced non-display area and overall number of components of the electronic product, so that the electronic product can be easily customized and have low weight, small thickness, and narrowed frame.

To achieve the above and other objects, the key-integrated LCD panel according to the present invention includes a transistor substrate and a color filter (CF) substrate laid on one face of the transistor substrate. A first conductor is arranged on one face of the transistor substrate facing toward the CF substrate and carries a first-level signal, and a second conductor is arranged on one face of the CF substrate facing toward the transistor substrate and carries a second-level signal. The second conductor meets the first conductor without contacting with the first conductor. A key district is formed at the position at where the second conductor meets the first conductor. When the key district is touched, the first and the second conductor electrically contact with each other, and the signal level at one of the first and the second conductor will change. A controller is provided for detecting any change in the signal level at one of the first and the second conductor. When a change in the signal level is detected, the controller outputs a key signal corresponding to the touched key district.

To further ensure good electrical contact of the first and the second conductor with each other, a conducting protrusion is preferably provided at the position at where the first and the second conductor meets each other, so that when the key district is touched, the first and the second conductor advantageously electrically contact with each other via the conducting protrusion. The conducting protrusion can be provided on one of the first and the second conductor, and can be a spacer externally coated with a conducting material or a spacer internally mixed with a conducting material.

One of the first-level and the second-level signal is a high-level voltage, and the other one of the first-level and the second-level signal is a low-level voltage. A voltage different between the first-level and the second-level signal is large enough for the controller to detect the change in the signal level at one of the first and the second conductor when the key district is touched.

In the present invention, the above-described key structure can be formed on the transistor substrate and the CF substrate of the LCD panel to constitute one key district for a user to touch, and the key district provides the same effect as a physical key. Moreover, the controller can detect whether the key district has been touched or not. If yes, the controller can generate a key signal corresponding to the touched key district to a system of the electronic device to thereby achieve the objects of the present invention.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a schematic view of a key-integrated LCD panel according to a first preferred embodiment of the present invention, in which the pixels in the LCD panel are arrayed into a matrix;
Fig. 2 is an enlarged top view of part of the key-integrated LCD panel of Fig. 1;
Fig. 3 is an exploded plan view of Fig. 2;
Fig. 4 is a sectional view taken along line 3-3 of Fig. 2;
Fig. 5 is similar to Fig. 4 and shows a variant embodiment of the present invention;
Figs. 6 to 9 show different examples of key structures provided on a TFT substrate and a CF substrate of the LCD panel according to the first preferred embodiment of the present invention for forming different key districts on the LCD panel;
Fig. 10 shows the provision of a key structure on the LCD panel according to the first preferred embodiment of the present invention by using multiple loops;
Figs. 11 to 13 show the contact of third conductors with first and second conductors in different key structures according to the first preferred embodiment of the present invention;
Fig. 14 is a schematic view of a key-integrated LCD panel according to a second preferred embodiment of the present invention, in which a first and a second conductor respectively provided on the TFT and the CF substrate of the LCD panel together constitute a key structure;
Fig. 15 is a schematic view of a key-integrated LCD panel according to a third preferred embodiment of the present invention, in which a plurality of key structures is arrayed into a matrix;
Fig. 16 shows a LCD monitor employing the LCD panel of the present invention, on which a plurality of virtual key images corresponding to the key districts of the key structures in the LCD panel is displayed; and
Fig. 17 is a conceptual view showing the distribution density of a plurality of spacers provided in the LCD panel of Fig. 16.

### DETAILED DESCRIPTION OF THE PREFERRED EMBODIMENTS

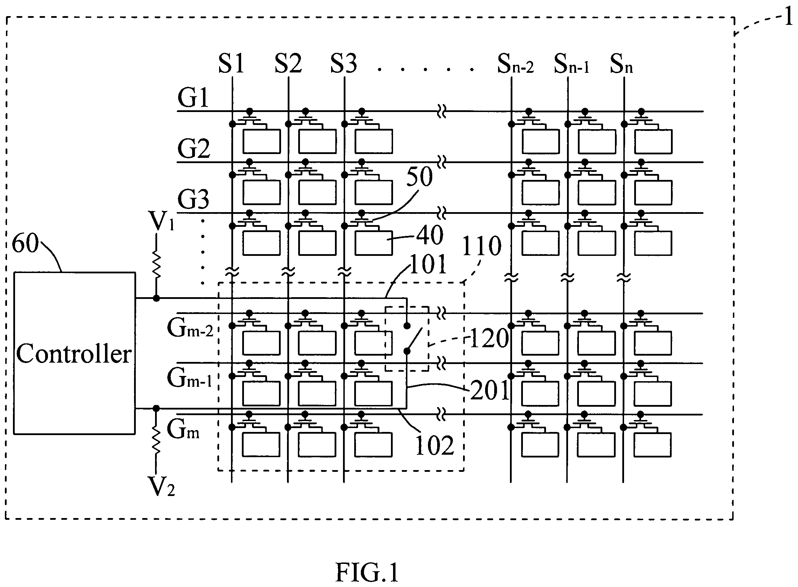

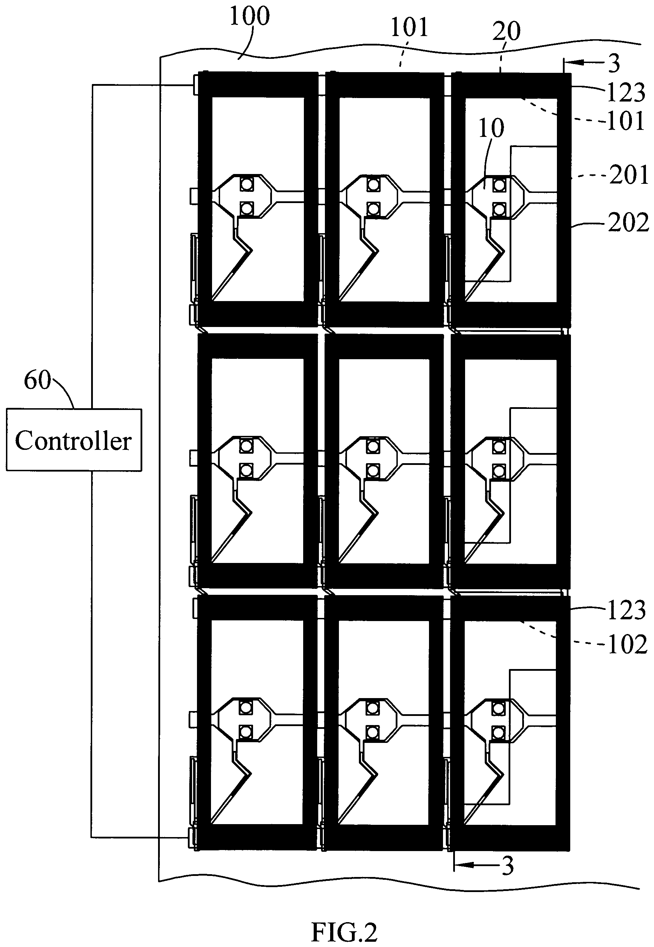

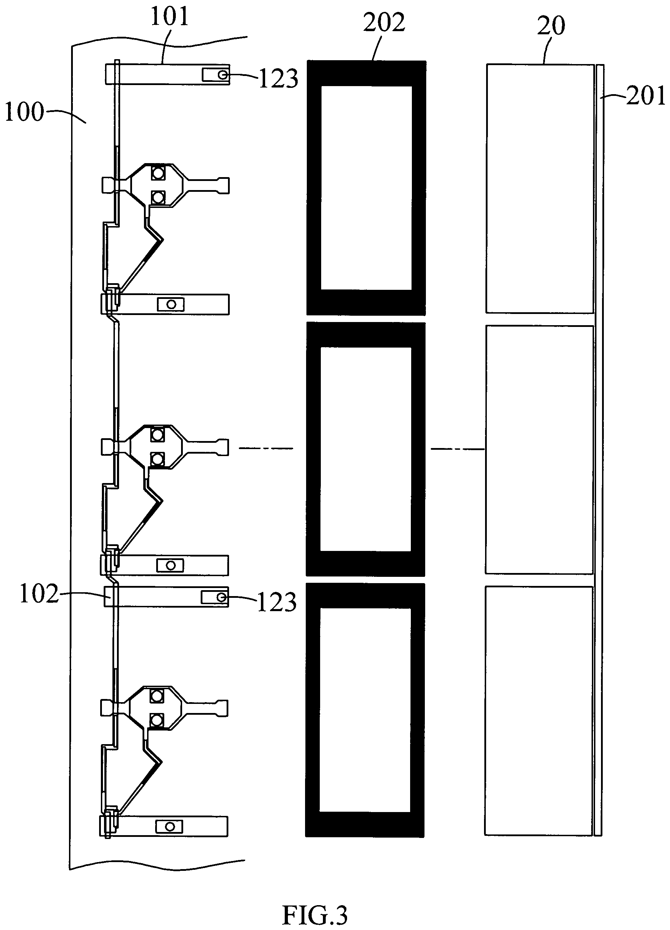

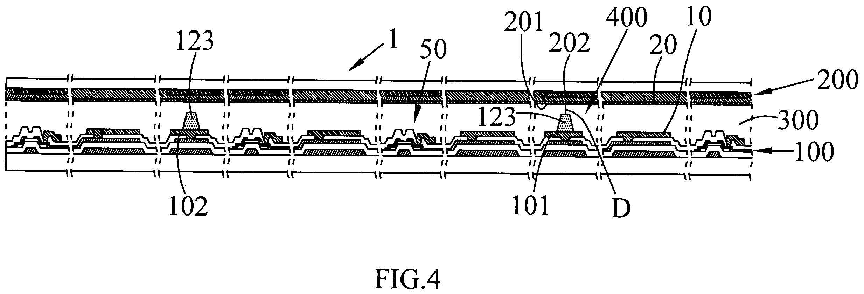

Please refer to Figs. 1 to 4, in which a key-integrated LCD panel 1 according to a first preferred embodiment of the present invention is shown. As shown, the key-integrated LCD panel 1 in the first preferred embodiment mainly includes a transistor substrate 100, which is a thin-film transistor (TFT) substrate in the illustrated first preferred embodiment and will also be briefly referred to as the TFT substrate throughout this document; a color filter (CF) substrate 200; a liquid crystal molecular layer 300 filled between the TFT substrate 100 and the CF substrate 200; and a key structure 400. More particularly, Fig. 1 is a schematic view showing pixels 40 in the LCD panel 1; Fig. 2 is an enlarged top view of a partial zone 110 on the actual LCD panel 1 of Fig. 1; Fig. 3 is an exploded plan view of Fig. 2; and Fig. 4 is a sectional view taken along line 3-3 of Fig. 2.

As can be seen in Fig. 4, the TFT substrate 100 is provided on one face facing toward the CF substrate 200 with a plurality of ITO (indium-tin-oxide) electrode layers 10 arrayed into a matrix, and the CF substrate 200 is provided on one face facing toward the TFT substrate 100 with an ITO common electrode layer 20. And, each of the pixels 40 is formed between each of the ITO electrode layers 10 and the ITO common electrode layer 20. Referring to Figs. 1 and 4, a plurality of transistors 50 is formed on the TFT substrate 100 through semiconductor fabrication to correspond to the pixels 40 for driving the pixels 40. Gates of the transistors 50 in each row are connected to a scan driving circuit (not shown) via a corresponding row scan line G₁ ∼ Gₘ, and sources of the transistors 50 in each column are connected to a data driving circuit (not shown) via a corresponding column scan line S₁ ∼ Sₙ. The scan driving circuit drives one row scan line G each time, so as to drive the transistors in that row to ON; and then the data driving circuit sends via a column scan line S a video signal to the pixels 40 in that column, so that a corresponding image is shown on the LCD panel 1.

In the illustrated first preferred embodiment, for the purpose of integrating physical keys into the LCD panel 1, the key structure 400 is built in the LCD panel 1. As shown in Figs. 1 to 4, the key structure 400 includes a first conductor 101 and a second conductor 102 provided on one face of the TFT substrate 100 facing toward the CF substrate 200, and a third conductor 201 provided on one face of the CF substrate 200 facing toward the TFT substrate 100.

The first and the second conductor 101, 102 are spaced from each other to parallelly and transversely extend across the TFT substrate 100 from one lateral side thereof. The first and the second conductor 101, 102 can be spaced by a distance determined according to a desired size for each key area. For a user to manipulate conveniently, the key area usually has a size close to that of a finger tip. Further, as shown in Figs. 2 ∼ 4, to avoid influence on the light transmission ratio (aperture ratio), the first conductor 101 and the second conductor 102 are arranged to extend transversely along a black mask 202 on the CF substrate 200. That is, the first conductor 101 and the second conductor 102 are located below the black mask 202.

The third conductor 201 is formed on the CF substrate 200 and arranged to extend longitudinally along the black mask 202 on the CF substrate 200, so as to meet the first and the second conductor 101, 102 without contacting with them, and a key district 120 is formed at position at where the third conductor 201 meets the first and the second conductor 101, 102. When the key district 120 is touched, the third conductor 201 is caused to move downward to thereby electrically contact with the first and the second conductor 101, 102. Of course, the first and the second conductor 101, 102 can be otherwise provided on the CF substrate 200 while the third conductor 201 can be otherwise provided on the TFT substrate 100.

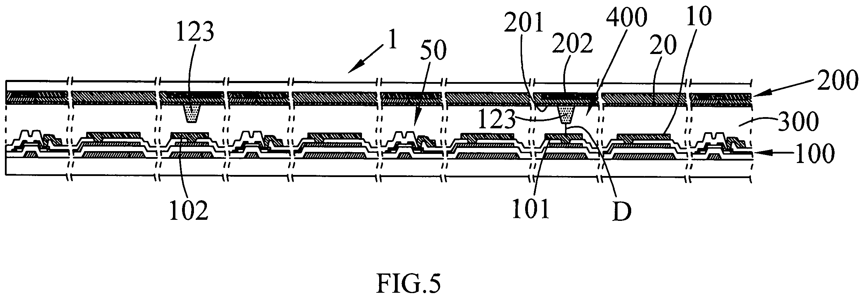

In the first preferred embodiment, to ensure the electrical contact of the first and second conductors 101, 102 with the third conductor 201 when the corresponding key district 120 is touched, at least one electrically conducting protrusion 123 is provided between the third conductor 201 and the first conductor 101 at the meeting position and between the third conductor 201 and the second conductor 102 at the meeting position. Whereby, when the key district 120 is touched, the third conductor 201 can easily electrically contact with the first and the second conductor 101, 102 via the conducting protrusions 123. In the illustrated first preferred embodiment, the conducting protrusions 123 are provided on the first and the second conductor 101, 102 to protrude toward the third conductor 201; and, when the key district 120 is not touched, a space "D" is maintained between the conducting protrusions 123 and the third conductor 201. Of course, as shown in Fig. 5, the conducting protrusions 123 can be otherwise provided on the third conductor 201 to protrude toward the first conductor 101 and the second conductor 102, and a space "D" is maintained between the conducting protrusions 123 and the first and second conductors 101, 102 when the key district 120 is not touched.

In the first preferred embodiment, the conducting protrusions 123 can be spacers externally coated with an electrically conducting material or spacers internally mixed with an electrically conducting material. Further, the conducting protrusions 123 can have shape, quantity, and distribution density determined according to an area of each of the meeting positions of the conductors.

To detect whether the third conductor 201 is in electrical contact with the first and the second conductor 101, 102 and accordingly determine whether the key district 120 is touched, in the first preferred embodiment, an end of the first conductor 101 and of the second conductor 102 located at one lateral side of the TFT substrate 100 are connected to a controller 60. The controller 60 provides a first-level signal V1 to the first conductor 101, and a second-level signal V2 to the second conductor 102, and detects the signal level at the first conductor 101. In the first preferred embodiment, the first-level signal V1 is a high-level voltage and the second-level signal V2 is a low-level voltage or a ground voltage. However, it is understood the first and the second-level signal VI, V2 are not necessarily restricted to the above-mentioned signal levels, so long as a voltage difference between the first-level signal V1 and the second-level signal V2 is large enough for the controller 60 to distinguish the first-level signal V1 from the second-level signal V2.

When the key district 120 is not touched, the controller 60 will continuously receive the first-level signal V1 from the first conductor 101 and knows the key district 120 is not touched. On the other hand, when the key district 120 is touched, the third conductor 201 is pushed downward to contact with the first and the second conductor 101, 102 via the conducting protrusions 123 to form a closed circuit. At this point, the signal level at the first conductor 101 drops from the first-level signal V1 to the second-level signal V2, and the second-level signal V2 is sent to the controller 60. From the change in the voltage level at the first conductor 101, the controller 60 knows the key district 120 is touched and sends a key code corresponding to the key district 120 to a computer or a system of an electronic device, so that the computer or the system performs a corresponding action or response. By "key code", it means a definition to the key district. When there are multiple key districts, each of which has a unique key code corresponding thereto. Of course, the controller 60 can also follow the change in signal level as detected from the first conductor 101 to directly control the electronic device system through pre-installed hardware or software thereof without the necessity of sending a key signal.

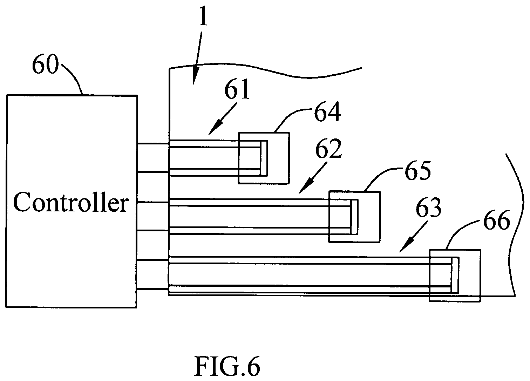

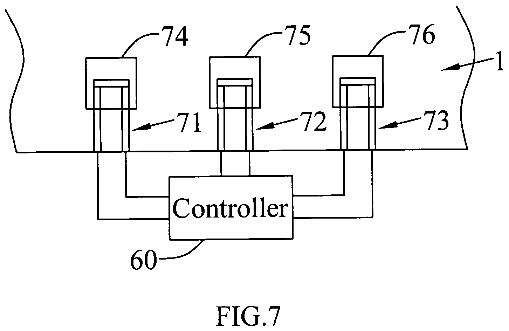

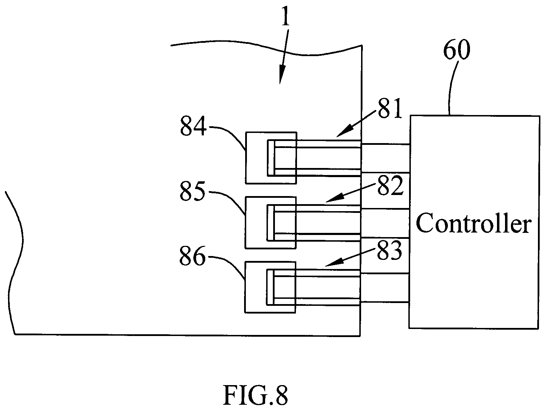

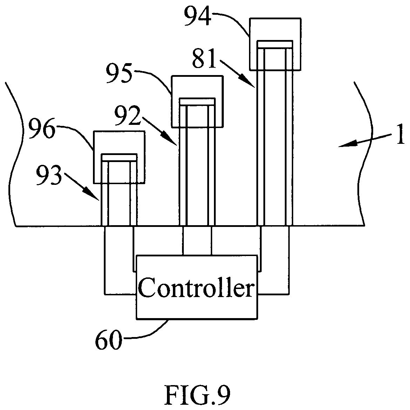

Therefore, based on the above-described key structure 400, a designer can design multiple key structures on the TFT substrate 100 and the CF substrate 200 of the LCD panel 1, such as the key structures 61-63, 71-73, 81-83, and 91-93 shown in Figs. 6-9, respectively, so as to constitute different key districts 64-66, 74-76, 84-86, and 94-96, respectively. When any one of these key districts is touched, the controller 60 detects the change in voltage sent by the key structure corresponding to the touched key district and therefore knows that a key district is touched.

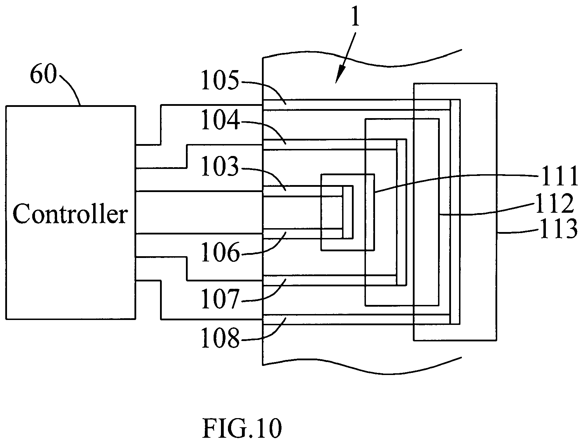

Further, for the keys to have flexible size in area, the key structures can be otherwise provided using multiple loops. For example, as shown in Fig. 10, three first conductors 103-105 and three second conductors 106-108 are parallelly arranged on one face of the TFT substrate to space from one another, and three third conductors 202-204 are arranged on one face of the CF substrate. When the third conductor 202 is subjected to a downward force, it will electrically contact with the first conductor 103 and the second conductor 106; when the third conductor 203 is subjected to a downward force, it will electrically contact with the first conductor 104 and the second conductor 107; and when the third conductor 204 is subjected to a downward force, it will electrically contact with the first conductor 105 and the second conductor 108. Therefore, three individual but overlapped key districts 111-113 are formed. When any one of these three key districts is touched, it will be determined by the controller 60 as the same one key has been actuated.

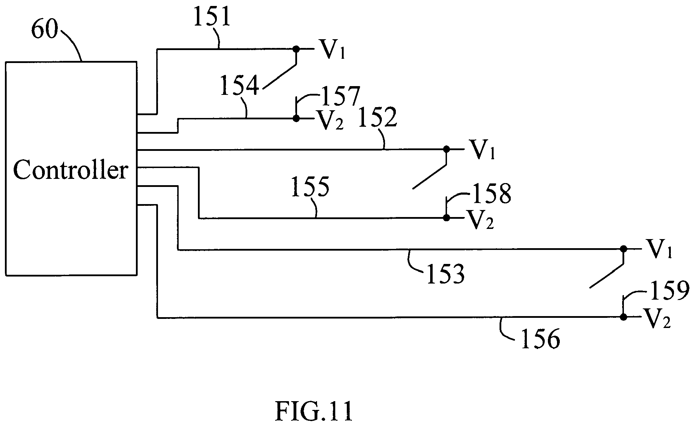

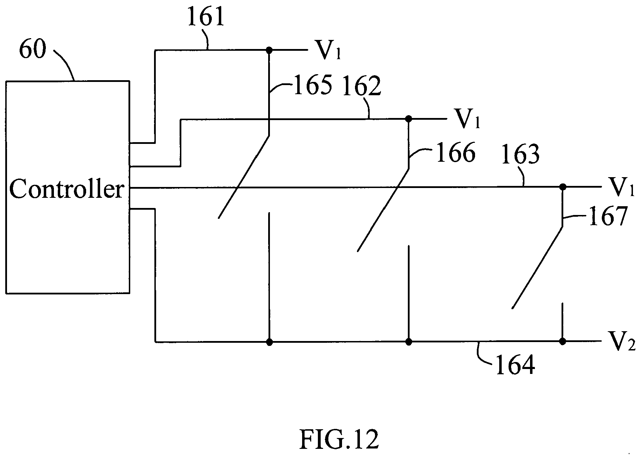

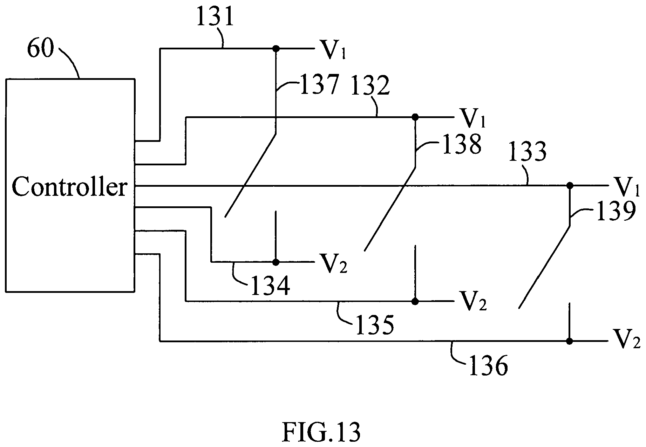

The key structures can be electrically made in different manners. For example, in Fig. 11, there are three key structures respectively using a first conductor 151-153 and a second conductor 154-156, and a third conductor 157-159. When any one of the third conductors 157-159 is touched, the third conductor will electrically contact with a corresponding first conductor 151-153 and a corresponding second conductor 154-156 via two conducting protrusions (not shown). Alternatively, as shown in Fig. 12, there are three key structures respectively using a first conductor 161-163, a common second conductor 164, and a third conductor 165-167. The third conductor 165-167 for each of the key structures is first connected at an end to the common second conductor 164 via a conducting resin (not shown). When the other end of any one of the third conductors 165-167 is touched, the third conductor 165-167 electrically contacts with the corresponding first conductor 161-163 via a conducting protrusion (not shown). Or, as shown in Fig. 13, there are three key structures respectively having a first conductor 131-133, a second conductor 134-136, and a third conductor 137-139. The third conductor 137-139 for each of the key structures is first connected at an end to a corresponding second conductor 134-136 via a conducting resin (not shown). When the other end of any one of the third conductors 137-139 is touched, the third conductor 137-139 electrically contacts with a corresponding first conductor 131-133 via a conducting protrusion (not shown).

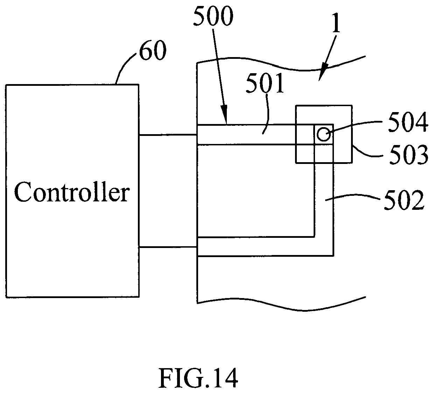

Fig. 14 shows another key structure 500 according to a second preferred embodiment of the present invention. Unlike the key structure 400 in the first preferred embodiment, the key structure 500 includes a first conductor 501 carrying a first-level signal V1 (not shown) and being arranged on one of the TFT substrate and the CF substrate, and a second conductor 502 carrying a second-level signal V2 (not shown) and being arranged on the other one of the TFT substrate and the CF substrate. The second conductor 502 is L-shaped to have a section parallel with the first conductor 501 and another section perpendicular to the first conductor 501. The perpendicular section of the second conductor 502 meets the first conductor 501 without contacting with the first conductor 501, and a key district 503 is formed at the position at where the first and the second conductor 501, 502 meet each other. The first-level signal V1 and the second-level signal V2 can be provided from the controller 60 or other circuits. Similar to the first embodiment, a conducting protrusion 504 can be provided on the first conductor 501 or the second conductor 502 at the meeting position. When the key district 503 is touched, the controller 60 detects a change in the signal level at the first conductor and thereby knows the key district 503 has been touched. Therefore, the key structure 500 in the second embodiment can provide the same function as the key structure 400 in the first embodiment.

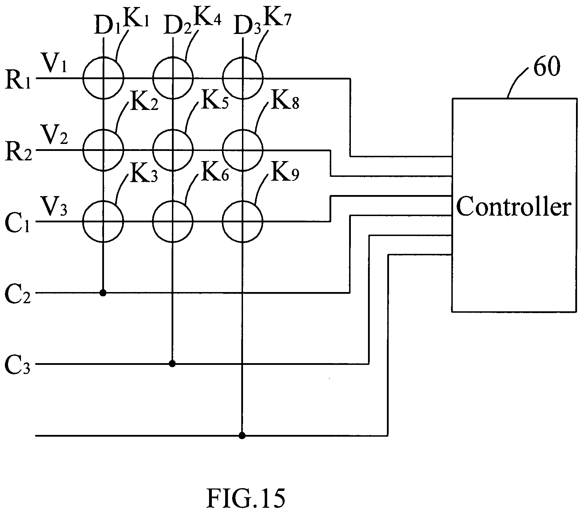

In the case a relatively large number of keys are to be integrated into the LCD panel 1, the key structures can be arrayed into a matrix to cooperate with a scanning mechanism, as provided in a third preferred embodiment of the present invention. Please refer to Fig. 15. For example, when 9 keys are to be arrayed into a two-dimensional matrix in the LCD panel 1, three parallelly spaced rows of first conductors R1-R3 and three parallelly spaced rows of second conductors C1-C3 separated from the first conductors R1-R3 can be arranged on the TFT substrate 100, and three third conductors D1-D3 can be arranged on the CF substrate 200 to perpendicularly intersect with the first conductors R1-R3 and the second conductors C1-C3, such that junctures of the third conductors D1-D3 with the first conductors R1-R3 form 9 key districts K1, K2, K3...K9, which are arrayed into a key matrix.

A conducting protrusion (not shown) is provided at each of the junctures of the third conductors D1-D3 and the first conductors R1-R3. The conducting protrusions can be located on the face of the TFT substrate 100 having the first conductors R1-R3 or on the face of the CF substrate 200 having the third conductors D1-D3. Meanwhile, the third conductors D1-D3 are respectively electrically connected at an end to the second conductors C1-C3 via a conducting resin.

When the controller 60 wants to detect whether the key districts K1-K9 are touched and which one of the key districts K1-K9 is touched, the controller 60 first provides a first-level voltage V1 to the first conductors R1-R3, and then sequentially provides a second-level voltage V2 to one of the second conductors C1-C3 and the first-level signal to the other two second conductors. Whereby, when one of the key districts, say K5, is touched, the first conductor R2, the second conductor C2, and the third conductor D2 are electrically connected together to form a closed circuit. At this point, the controller 60 can detect that the voltage level at the first conductor R2 drops from the first-level voltage V1 to the second-level voltage V2 and accordingly knows the key district K5 has been touched.

With the above-described matrix-form key structure design, it is able to reduce the number of conductors when there are a relatively large number of keys to be integrated into the LCD panel 1.

Therefore, a designer can pre-print specific key images on the LCD panel 1 at positions corresponding to the key districts, or use a software program pre-installed on the electronic device to create virtual key images and show the same on the LCD panel at positions corresponding to the key districts, so as to guide a user to touch the printed or virtual key images for actuating corresponding key districts. When the controller 60 detects that a certain one of the key images is touched, the controller 60 will send out a key signal, that is, a key code, corresponding to the touched key image to the system of the electronic device, driving the system to perform a function corresponding to the touched key image. Depending on the system or required functions, the key images can be general keyboard keys, multimedia function keys, function keys for a financial transaction interface, and the like. For the purpose of the present invention, the term "electronic device" means various kinds of electronic equipment applied in industrial and commercial fields and using an LCD panel as a display interface, including, but not limited to, portable consumptive electronic products, smart remote controllers, information appliances, auto-teller machines for banks, navigators for cars, office automated apparatuses, and public service display stations. Moreover, the software program installed on the same one electronic device for creating virtual key images can be converted to display different virtual key images in response to different functional requirements, so that the electronic device allows a user to do multiple types of different inputs, and the same key structure can be used to achieve multiple uses.

Further, when the electronic device changes the display direction on the LCD panel thereof, such as turns the image by 90 degrees or 180 degrees, or adjusts the resolution of the LCD panel, the software program for creating the virtual key images will also adjust the positions and area size of the virtual key images on the LCD panel, so that the virtual key images always align with the positions of the corresponding key districts.

Moreover, the electronic device can be further provided with a trigger key (not shown) to awake the key functions that have been integrated into the LCD panel 1. That is, when the LCD panel 1 is in a general display mode, the key functions integrated into the LCD panel 1 are disabled and the virtual key images are not shown. However, when the trigger key is pushed, the key functions integrated into the LCD panel 1 are enabled, and the virtual key images are shown for the user to manipulate. When a preset period of time, such as 2 minutes, has lapsed and the user does not operate on the virtual key images, the key functions integrated into the LCD panel 1 will be automatically disabled and the virtual key images are hidden until the trigger key is pushed next time.

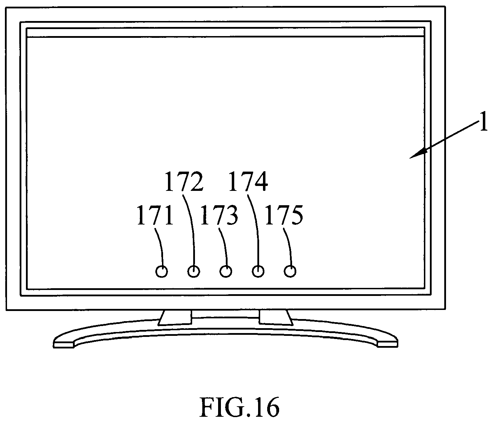

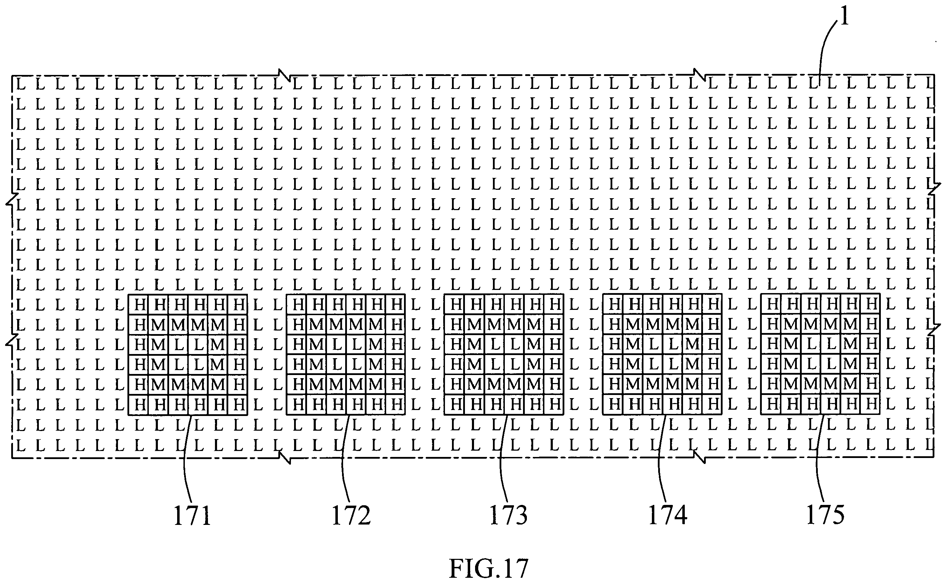

Further, for the purpose of properly controlling the area of key districts that can be touched on the LCD panel and maintaining the space between the TFT substrate and the CF substrate of the LCD panel as well as the compression strength and usable life of the LCD panel, the spacers in the LCD panel 1 can be properly designed to have optimal height, size, and distribution density. For example, suppose five key structures are built in the LCD panel 1 of the electronic device, the positions of virtual key images 171-175 corresponding to these five key structures can be that as shown in Fig. 16. Then, the spacers can be provided between the TFT substrate 100 and the CF substrate 200 of the LCD panel 1 in a distribution density as shown in Fig. 17. The distribution density of the spacers in the LCD panel 1 can be divided into three different levels, namely, High (H), Middle (M), and Low (L) levels. As can be seen from Fig. 17, the distribution density of spacers in a central portion of each of the virtual key images 171-175 is the lowest level L, while the distribution density of the spacers around an outer peripheral portion of each of the virtual key images 171-175 is the highest level H. Therefore, the central portions of the virtual key images 171-175 are relatively soft to provide proper coefficient of compression elasticity and show the characteristics of touch keys. With the relatively soft central portions, the virtual key images on the LCD panel 1 of the present invention not only effectively provide the user with sensory and tactile feedback, but also avoid the problem of undesirably touching adjacent keys.

In brief, in the present invention, different types of key structures can be formed on the TFT substrate and the CF substrate of the LCD panel to constitute one or more key districts for a user to touch, and the key districts provide the same effect as the physical keys. Moreover, the controller 60 can detect any key district that has been touched and generates a key signal corresponding to the touched key district to the system of the electronic device to thereby achieve the objects of the present invention.

The present invention has been described with some preferred embodiments thereof and it is understood that many changes and modifications in the described embodiments can be carried out without departing from the scope of the invention that is intended to be limited only by the appended claims.

## Claims

1. A key-integrated LCD panel (1), comprising:
a transistor substrate (100);
a color filter (CF) substrate (200) being laid on one face of the transistor substrate (100);
a first conductor (101) being arranged on one face of the transistor substrate (100) facing toward the CF substrate (200) and carrying a first-level signal; and
a second conductor (102) being arranged on one face of the CF substrate (200) facing toward the transistor substrate (100) and carrying a second-level signal; the second conductor (102) meeting the first conductor (101) without contacting with the first conductor (101), and a key district (120) being formed at a position at where the first (101) and the second conductor (102) meet each other; and wherein when the key district (120) is touched, the first (101) and the second conductor (102) electrically contact with each other and the signal level at one of the first (101) and the second conductor (102) will change.

2. The key-integrated LCD panel (1) as claimed in claim 1, further comprising a controller (60) for detecting whether the signal level at one of the first (101) and the second conductor (102) has changed or not; and wherein when the controller (60) detects any change in the signal level, a key signal corresponding to the key district (120) is output.

3. The key-integrated LCD panel (1) as claimed in claim 1, further comprising a conducting protrusion (123) provided between the first conductor (101) and the second conductor (102), whereby when the key district (120) is touched, the first (101) and the second conductor (102) electrically contact with each other via the conducting protrusion (123).

4. The key-integrated LCD panel (1) as claimed in claim 3, wherein the conducting protrusion (123) is provided on one of the first (101) and the second conductor (102).

5. The key-integrated LCD panel (1) as claimed in claim 4, wherein the conducting protrusion (123) is selected from the group consisting of a spacer externally coated with a conducting material and a spacer internally mixed with a conducting material.

6. A method of integrating keys into an LCD panel(1), the LCD panel (1) including a transistor substrate (100) and a CF substrate (200) laid on the transistor substrate (100), the method comprising the following steps:
(A) arranging a first conductor (101) carrying a first-level signal on one face of the transistor substrate (100) facing toward the CF substrate(200);
(B) arranging a second conductor (102) carrying a second-level signal on one face of the CF substrate (200) facing toward the transistor substrate (100), such that the second conductor (102) meets the first conductor (101) without contacting with the first conductor (101), and a key district (120) is formed at the position at where the second (102) and the first conductor (101) meet each other, and the signal level at one of the first (101) and the second conductor (102) will change when the key district (120) is touched; and
(C) outputting a key signal corresponding to the touched key district (120) when a change in the signal level of one of the first (101) and the second conductor (102) is detected.

7. The method of integrating keys into an LCD panel (1) as claimed in claim 6, further comprising the step of providing a conducting protrusion (123) between the first (101) and the second conductor (102), such that when the key district (120) is touched, the first (101) and the second conductor (102) electrically contact with each other via the conducting protrusion (123).

8. The method of integrating keys into an LCD panel (1) as claimed in claim 7, wherein the conducting protrusion (123) is provided on one of the first (101) and the second conductor (102).

9. The method of integrating keys into an LCD panel (1) as claimed in claim 8, wherein the conducting protrusion (123) is selected from the group consisting of a spacer externally coated with a conducting material and a spacer internally mixed with a conducting material.

## Patentansprüche

1. LCD-Tafel (1) mit integrierten Tasten, umfassend:
ein Transistorsubstrat (100);
ein Farbfiltersubstrat (200), das auf eine Fläche des Transistorsubstrats (100) gelegt ist;
einen ersten Leiter (101), der auf einer dem Farbfiltersubstrat (200) zugewandten Fläche des Transistorsubstrats (100) angeordnet ist und ein Signal mit einem ersten Pegel trägt; und
einen zweiten Leiter (102), der auf einer dem Transistorsubstrat (100) zugewandten Fläche des Farbfiltersubstrats (200) angeordnet ist und ein Signal mit einem zweiten Pegel trägt; wobei der zweite Leiter (102) auf den ersten Leiter (101) trifft, ohne einen Kontakt mit dem ersten Leiter (101) herzustellen, und an einer Stelle, an der der erste Leiter (101) und der zweite Leiter (102) aufeinandertreffen, ein Tastenbereich (120) ausgebildet ist; und wobei bei einer Berührung des Tastenbereichs (120) ein elektrischer Kontakt zwischen dem ersten Leiter (101) und dem zweiten Leiter (102) herstellbar ist und der Signalpegel auf dem ersten Leiter (101) oder dem zweiten Leiter (102) veränderbar ist.

2. LCD-Tafel (1) mit integrierten Tasten nach Anspruch 1, des Weiteren umfassend eine Steuerung (60) zur Erkennung, ob sich der Signalpegel auf dem ersten Leiter (101) oder dem zweiten Leiter (102) verändert hat oder nicht; und wobei bei einer Erkennung einer Veränderung des Signalpegels durch die Steuerung (60) ein dem Tastenbereich (120) entsprechendes Tastensignal ausgebbar ist.

3. LCD-Tafel (1) mit integrierten Tasten nach Anspruch 1, des Weiteren umfassend einen zwischen dem ersten Leiter (101) und dem zweiten Leiter (102) vorgesehenen leitenden Vorsprung (123), wobei bei einer Berührung des Tastenbereichs (120) über den leitenden Vorsprung (123) ein elektrischer Kontakt zwischen dem ersten Leiter (101) und dem zweiten Leiter (102) herstellbar ist.

4. LCD-Tafel (1) mit integrierten Tasten nach Anspruch 3, wobei der leitende Vorsprung (123) an dem ersten Leiter (101) oder an dem zweiten Leiter (102) vorgesehen ist.

5. LCD-Tafel (1) mit integrierten Tasten nach Anspruch 4, wobei der leitende Vorsprung (123) wahlweise aus einem außen mit einem leitfähigen Material beschichteten Abstandhalter oder einem innen mit einem leitfähigen Material durchsetzten Abstandhalter gebildet ist.

6. Verfahren zum Integrieren von Tasten in eine LCD-Tafel (1), wobei die LCD-Tafel (1) ein Transistorsubstrat (100) und ein auf das Transistorsubstrat (100) gelegtes Farbfiltersubstrat (200) umfasst, wobei das Verfahren die folgenden Schritte umfasst:
(A) Anordnen eines ein Signal mit einem ersten Pegel tragenden ersten Leiters (101) auf einer dem Farbfiltersubstrat (200) zugewandten Fläche des Transistorsubstrats (100);
(B) Anordnen eines ein Signal mit einem zweiten Pegel tragenden zweiten Leiters (102) auf einer dem Transistorsubstrat (100) zugewandten Fläche des Farbfiltersubstrats (200), derart, dass der zweite Leiter (102) auf den ersten Leiter (101) trifft, ohne einen Kontakt mit dem ersten Leiter (101) herzustellen, wobei an der Stelle, an der der zweite Leiter (102) und der erste Leiter (101) aufeinandertreffen, ein Tastenbereich (120) ausgebildet wird und sich der Signalpegel auf dem ersten Leiter (101) oder auf dem zweiten Leiter (102) verändert, wenn der Tastenbereich (120) berührt wird; und
(C) Ausgeben eines dem berührten Tastenbereich (120) entsprechenden Tastensignals, wenn eine Veränderung des Signalpegels des ersten Leiters (101) oder des zweiten Leiters (102) erkannt wird.

7. Verfahren zum Integrieren von Tasten in eine LCD-Tafel (1) nach Anspruch 6, des Weiteren umfassend den Schritt des Vorsehens eines leitenden Vorsprungs (123) zwischen dem ersten Leiter (101) und dem zweiten Leiter (102), derart, dass der erste Leiter (101) und der zweite Leiter (102) über den leitenden Vorsprung (123) einen elektrischen Kontakt miteinander herstellen, wenn der Tastenbereich (120) berührt wird.

8. Verfahren zum Integrieren von Tasten in eine LCD-Tafel (1) nach Anspruch 7, wobei der leitende Vorsprung (123) an dem ersten Leiter (101) oder an dem zweiten Leiter (102) vorgesehen wird.

9. Verfahren zum Integrieren von Tasten in eine LCD-Tafel (1) nach Anspruch 8, wobei der leitende Vorsprung (123) wahlweise aus einem außen mit einem leitfähigen Material beschichteten Abstandhalter oder einem innen mit einem leitfähigen Material durchsetzten Abstandhalter gebildet wird.

## Revendications

1. Panneau LCD (1) avec des touches intégrées, comprenant :
un substrat de transistor (100) ;
un substrat (200) de filtre couleur (FC) posé sur une face du substrat de transistor (100) ;
un premier conducteur (101) disposé sur une face du substrat de transistor (100) tournée vers le substrat CF (200) et portant un signal de premier niveau ; et
un deuxième conducteur (102) disposé sur une face du substrat CF (200) tournée vers le substrat de transistor (100) et portant un signal de deuxième niveau ; le deuxième conducteur (102) rencontrant le premier conducteur (101) sans venir en contact avec le premier conducteur (101), et une zone de touche (120) étant formée dans une position où le premier conducteur (101) et le deuxième conducteur (102) se rencontrent ; et dans lequel quand la zone de touche (120) est touchée, le premier conducteur (101) et le deuxième conducteur (102) viennent en contact électrique l'un avec l'autre et le niveau du signal sur un parmi le premier conducteur (101) et le deuxième conducteur (102) change.

2. Panneau LCD (1) avec des touches intégrées selon la revendication 1, comprenant en outre une commande (60) pour détecter si le niveau du signal sur un parmi le premier conducteur (101) et le deuxième conducteur (102) a changé ou non ; et dans lequel quand la commande (60) détecte toute changement dans le niveau du signal, un signal de touche correspondant à la zone de touche (120) est émis.

3. Panneau LCD (1) avec des touches intégrées selon la revendication 1, comprenant en outre une saillie conductrice (123) prévue entre le premier conducteur (101) et le deuxième conducteur (102) par laquelle, quand la zone de touche (120) est touchée, le premier conducteur (101) et le deuxième conducteur (102) viennent en contact électrique l'un avec l'autre par l'intermédiaire de la saillie conductrice (123).

4. Panneau LCD (1) avec des touches intégrées selon la revendication 3, dans lequel la saillie conductrice (123) est prévue sur un parmi le premier conducteur (101) et le deuxième conducteur (102).

5. Panneau LCD (1) avec des touches intégrées selon la revendication 4, dans lequel la saillie conductrice (123) est sélectionnée dans le groupe consistant en un espaceur revêtu extérieurement d'un matériau conducteur et un espaceur mélangé intérieurement avec un matériau conducteur.

6. Procédé pour intégrer des touches dans un panneau LCD (1), le panneau LCD comprenant un substrat de transistor (100) et un substrat CF (200) posé sur le substrat de transistor (100), le procédé comprenant les étapes suivantes :
(A) disposer un premier conducteur (101) portant un signal de premier niveau sur une face du substrat de transistor (100) tournée vers le substrat CF (200) ;
(B) disposer un deuxième conducteur (102) portant un signal de deuxième niveau sur un face du substrat CF (200) tournée vers le substrat de transistor (100) de telle manière que le deuxième conducteur (102) rencontre le premier conducteur (101) sans venir en contact avec le premier conducteur (101), et une zone de touche (120) est formée dans la position où le deuxième conducteur (102) et le premier conducteur (101) se rencontrent, et le niveau du signal sur un parmi le premier conducteur (101) et le deuxième conducteur (102) change quand la zone de touche (120) est touchée ; et
(C) émettre un signal de touche correspondant à la zone de touche (120) touchée quand un changement dans le niveau du signal d'un parmi le premier conducteur (101) et le deuxième conducteur (102) est détecté.

7. Procédé pour intégrer des touches dans un panneau LCD (1) selon la revendication 6, comprenant en outre l'étape consistant à prévoir une saillie conductrice (123) entre le premier conducteur (101) et le deuxième conducteur (102) de telle manière que quand la zone de touche (120) est touchée, le premier conducteur (101) et le deuxième conducteur (102) viennent en contact électrique l'un avec l'autre par l'intermédiaire de la saillie conductrice (123).

8. Procédé pour intégrer des touches dans un panneau LCD (1) selon la revendication 7, dans lequel la saillie conductrice (123) est prévue sur un parmi le premier conducteur (101) et le deuxième conducteur (102).

9. Procédé pour intégrer des touches dans un panneau LCD (1) selon la revendication 8, dans lequel la saillie conductrice (123) est sélectionnée dans le groupe consistant en un espaceur revêtu extérieurement d'un matériau conducteur et un espaceur mélangé intérieurement avec un matériau conducteur.
